# EUROPÄISCHE PATENTANMELDUNG

(11) **EP 2 485 477 A1**
(43) Veröffentlichungstag der Anmeldung: **08.08.2012**
(21) Anmeldenummer: 11000988.3
(22) Anmeldetag: 08.02.2011
(51) Int. Cl.: H04N 5/44, G06F 3/023

(54) **Vorrichtung zum Eingeben und Editieren von Zeichenketten in einem digitalen Fernsehempfänger mit einem Fernbediengeber**

(71) Anmelder: TechniSat Digital GmbH, 54550 Daun (DE)
(72) Erfinder: Apfelboeck, Raymund, Dipl-Informatiker (FH), 01217 Dresden (DE); Loewe, Scott, Dipl.-Informatiker (FH), 01471 Radeburg (DE); Kriszick, Swantje, Dipl.-Informatikerin, 01159 Dresden (DE)

(57) **Zusammenfassung**

Bei der vorliegenden Erfindung, einer Vorrichtung zum Eingeben und Editieren von Zeichenketten in einem digitalen Hybrid-Fernsehempfänger mit einem Fernbediengeber (FB), wird die Aufgabe gelöst, einem Nutzer eine Vorrichtung bereltzustellen, die eine Eingabe von Zeichen (Z) für Empfängerfunktionen dahingehend verbessert, dass die Eingabe variabler, zeitsparender und komfortabler wird, ohne dass für die Zeicheneingabe zusätzliche Eingabemittel verwendet werden, die geräte- und kostentechnischen Mehraufwand verursachen.

Der Fernsehempfänger umfasst eine prozessargestützte grafische Benutzeroberfläche, welche die Programmführungseinrichtung beinhaltet. Zur Lösung der Aufgabe stellt eine besonders ausgeführte Empfänger-Firmware des digitalen Fernsehempfängers eine grafische Benutzeroberfläche bereit, die eine empfängerinteme elektronische Programmführungseinrichtung mit einem interaktiven, hierarchischen Menüsystem zum Steuern weiterer Empfängerfunktionen darstellt, ein Eingeben von Zeichen (Z), die Bestandteil von Zeichenketten sind, erfolgt in vorteilhafter Weise mit einem herkömmlichen Fernbediengeber (FB).

## Beschreibung

Die Erfindung betrifft eine Vorrichtung zum Eingeben und Editieren von Zeichenketten in einem digitalen Fernsehempfänger mit einem herkömmlichen Fernbediengeber und dient der Steuerung eines Multimediaterminals, wie beispielsweise eines Fernsehempfängers für digitaler Videorundfunk und Kabelfernsehen, weicher über eine Kommunikationsverbindung Zugang zu einem Netzwerk besitzt und somit die Nutzung von Internetdiensten ermöglicht. Insbesondere betrifft die Erfindung Mittel zum Auslösen von besonderen Bedienfunktionen, die einer Eingabe von Zeichen oder Text bedürfen, um Bedienfunklionen wie das Suchen nach empfangbaren Medieninhalten auszulösen.

Digitale Fernsehempfänger, die neben dem herkömmlichen Empfang und der Wiedergabe von Medieninhalten, wie Hörrundfunk- und Fernsehprogrammen durch Medienanbieter bereitgestellt, auch Zugriff auf Mediendienste, die über ein Kommunikationsnetz erreichbar sind, unterstützen, sind als Hybrid-Fernsehempfänger bekannt. Diese stellen Multimediaterminals dar, welche als multimediale Steuerzentrale auch die Wiedergabe von Medieninhalten weiterer Medienquellen ermöglichen. Zu diesen Medienquellen zählen Audio- und Videoabspielgeräte, Spielekonsolen und Massenspeichermedien.

Diese Multimediaterminals unterstützen die Ausführung einer wachsenden Anzahl von zusätzlichen Empfängerfunktionen, die erst nach einer Eingabe von Zeichenketten, die sowohl aus alphabetischen, numerischen als auch Sonderzeichen bestehen können, die abhängig von der Empfängerfunktion sind. Zu diesen Empfängerfunktionen zählt beispielsweise das Aktivieren von Suchfunktionen oder das Abfragen von Information über eine Kommunikationsverbindung, belspielsweise zum Internet, eine Verwaltung von Medieninhalten, wie Audio- und Videoinhalten, sowie eine Anpassung von Geräteelristellungen an spezifische Nutzeranforderungen.

Zum Steuern und Verwalten der komplexen Struktur des digitalen Multimediaterminals stellt eine Empfänger-Firmware dem Nutzer eine prozessorgestützte grafische Benutzeroberfläche zur Verfügung, die als wichtige Bedienkomponente auch eine interaktive Programmführungseinrichtung generiert.

Die Programmführungseinrichtung nutzt eine Rundfunkdienstiiste mit Einstellinformation zu Rundfunk- und Kabelfernsehdiensten sowie Begleitinformation zu bereitgestellten Medieninhalten, welche in einer geräteinternen Programmführungsdatenbank gespeichert sind, und stellt diese Daten dem Nutzer zur Information und als Grundlage für weitere Empfängerfunktionen zur Verfügung.

Die Programmführungseinrichtung steuert darüber hinaus auch die Wiedergabe von Medieninhalten von peripher angeschlossenen Geräten und ermöglicht die Wiedergabe von Rundfunk-, Fernseh- und Internetinhalten. In Menüs wird dem Nutzer beispielsweise eine Übersicht von empfangbaren Medieninhalten mit entsprechenden Daten, wie Start- und Endzeit, Medienanbieter, Titelinformation und Inhaltsangaben zur Verfügung gestellt, welche das Aufnehmen von und die. Suche nach Medieninhalten unterstützt.

Es sind verschiedene Möglichkeiten zur Eingabe von Zeichen, wie die Verwendung von Hardware, entsprechende Tastaturen für Computer oder die von mobilen Telefongeräten, bekannt, über die es möglich ist, die Eingabe von Zeichen vorzunehmen.

Der Nachteil der bekannten Eingabemethoden von Zeichen, die über eine hardwaremäßige Tastatur erfolgen, besteht darin, dass sie nur über eine Zeichensortierung verfügen, welche unzureichend an die vielfältigen Zeicheneingabemöglichkeiten eines Hybrid-Fernsehempfängers anpassbar ist. So erfordern die genannten Hybridternsehempfänger Zeicheneingaben für Empfängerfunktionen von Dienstbezeichnungen, Suchbegriffen zu Medieninhalten, Pass- und Schlüsselwörtern, Pfadnamen, Datelnamen, Domainbezeichnungen, Netzwerkadressen und weiteren.

Für die vorliegende Erfindung ist es dabei unerheblich, ob der Fernsehempfänger über integrierte Audio- und Videoausgabemittel verfügt oder wie ein Vorschaltgerät, zum Beispiel einer Set-Top-Box, mit diesen verbunden ist.

Die Aufgabe der vorliegenden Erfindung besteht darin, einem Nutzer eine Vorrichtung beraitzu-: stellen, die für die oben genannten Empfängerfunktionen die Eingabe und Edition von Zeichenketten dahingehend verbessert, dass die Eingabe variabler, zeitsparender und komfortabler wird, ohne dass für die Zeicheneingabe zusätzliche Eingabemittel verwendet werden, die geräte- und kostentechnischen Mehraufwand verursachen.

Zur Lösung der Aufgabe stellt eine besonders ausgeführte Empfänger-Firmware des digitalen Fernsehempfängers eine grafische Benutzeroberfläche bereit, die eine empfängerinterne elektronische Programmführungseinrichtung mit einem interaktiven, hierarchischen Menüsystem zum Steuern weiterer Empfängerfunktionen darstellt.

Gegenüber einer konventionelles Programmführungseinrichtung verfügt das interaktive, hierarchische Menüsystem über verschiedene Ebenen von Menüs und Untermenüs, die neben Programmführungsfunktionen auch zum Auswählen und Ausführen weiterer vielfältiger Empfängerfunktionen dienen, welche für eine Auswahl, Eingabe und Edition von Zeichen einer Zeichenkette einen herkömmlichen Fernbediengeber verwendet.

Die Menüs der elektronischen Programmführungseinrichtung, welchebeispielsweise zum Auslösen von Suchfunktionen bezüglich Medieninhalten und die der Beschaffung von Information' über Kommunlkationsverbindungen durch Eingabe von Suchbegriffen dienen, sind Eingabe- und Auswahlmenüs. Die Zeichenkette eines Suchbegriffes kann dabei aus verschiedenen Zeichenarten, wie Buchstaben, Ziffern und Sonderzeichen, bestehen.

Es ist weiterhin möglich, dass mithilfe der Menüs Zugangsrechte vergeben, Schlüsselwörter, Passwörter eingegeben oder geändert und die Bezeichnung von Ordnern, in den mit dem Fernsehempfänger verbundenen Speichermitteln, verwaltet sowie Internetadressen eingegeben und geändert werden.

Da ein gerätetechnlscher Mehraufwand in Form von zusätzlichen Hardwarekomponenten zur variablen Auswahl und Eingabe von Zeichen vermieden werden soll, erfolgt bei der vorliegenden Erfindung die Eingabe von Zeichen über ein System von Zeichenauswahifeldern mit Zeichenauswahlelementen, wobei die Programmführungseinrichtung jeweils automatisch die Struktur der Auswahlfelder bezüglich Anzahl an Zeichenauswahlelementen und Auswahl- bzw. Eingabeoptionen an die gewünschte Empfängerfunktion anpasst.

Die Zeichenauswahffelder enthalten Zeichenauswahlelemente, welche einzelnen Zeichen entsprechen, und sind Bestandteil von Menüs, die beisplelsweise eine Suchanfrage nach einem Medieninhalt im Programmführer stellt oder eine vom Nutzer gewünschte Internetseite aufruft und am Bildschirm des digitalen Fernsehempfängers ausgegeben sowie über einen herkömmlichen Fernbediengeber gesteuert wird. Der Fernbediengeber des Empfangsgerätes verfügt unter anderem über Zifferntasten und Funktionstasten, beispielsweise zur Auswahl von Cursorbewegungen, Bestätigungen von Eingaben, Erhöhen oder Absenken von Einstellwerten oder für anwendungsspezifische Sonderfunktionen, jedoch nicht über Tasten mit einer direkten Zuordnung zu einem Alphabet. Einzelne Tasten des Fernbediengebers lösen in den Menüs der Programmführungseinrichtung und deren Feldern verschiedene Empfängerfunktionen sowie Gerätefunküonen aus.

Gemäß der vorliegenden Erfindung generiert die Programmführungseinrichtung der grafischen Benutzeroberfläche das hierarchische Menüsystem mit den angepassten Zeichenauswahlfeldern zur Eingabe und Auswahl von Zeichen. Das Menüsystem verfügt über zweidimensionale Zelchenauswahifelder mit individuellen, anwendungsabhängigen Zeichensortierungen, die mithilfe des Fernbediengebers eine Zeichenauswahl ermöglichen. Zwischen den verschiedenen Zeichensortierungen kann mit dem Fernbediengeber umgeschaltet werden. Die Zeichensortierung kann beispielsweise dem Aufbau einer Computertastatur in Reihen und Zeilen entsprechen, bei der die Sortierung der Zeichenauswahlelemente im Zeichenauswahlfeld alphabetisch oder analog der durch Betätigen der Funktionstaste ,www' des Fernbediengebers direkt aufgerufen werden. Eine automatische Aktualisierung der Favoritenliste erfolgt durch die programmführungseinrichtung nach Eingabe weiterer internetadressen.

Vorteilhaft weist der Hauptmodus Funktionsfelder auf, beispielsweise zum Löschen von ausgewählten Zeichen im Textfeld, zum Bestätigen ausgewählter Zeichen, die einen oder mehrere Begriffe für die Aktivierung einer Empfängerfunktlon bilden, und zum Bewegen eines Cursors im.Zeichenauswahlfeld oder im Textfeld.

Im Hauptmodus wählt der Nutzer einzelne Zeichenauswahlelemente des Zeichensatzes vom Zelchenauswahlfeld mit Funktionstasten des Fernbediengebers aus. Das ausgewählte Zeichenauswahlelement wird durch Hervorhebung im Zeichenauswahlfeld gekennzeichnet und im Textfeld angezeigt. Unter einem Zeichensatz im Sinne der vorliegenden Erfindung wird ein Vorrat an Zeichen für Zeichenauswahlelemente zur Darstellung von Sachverhelten verstanden, dabei können diese Zeichen unter anderem der Buchstabenvorrat eines Alphabetes, welcher der eingestellten Benutzersprache entspricht, sein. Darüber hinaus gehören aber auch Ziffern und andere Symbole, beispielsweise Sonderzeichen oder verschiedenste Piktogramme, zu den Zeichenauswahlelementen des Zeichensatzes.

Im Nebenmodus ist das Auswählen von Zeichen besonders vorteilhaft, da ein einfaches, schnelles Auswählen durch Betätigung der Zifferntasten des Fernbediengebers ermöglicht wird. Dazu sind die der benutzten Zifferntaste zugeordneten Zeichen als Zeichenoption linear in einer Reihe anstelle des Zeichenauswahifeldes angeordnet. Die Ausgabe solcher Zeichen, die nicht in Verbindung mit der entsprechenden Zifferntaste auswählbar sind, unterbleibt. Dadurch erhält der Nutzer einen schnellen Überblick über die auswählbaren Zeichen der betätigten Zifferntaste..Um ein bestimmtes Zeichen mit dem Fernbediengeber auszuwählen, wird die Zifferntaste auch mehrfach betätigt, gleichzeitig wird das Zeichen in der angezeigten Zeichenoption hervorgehoben. Das gewünschte Zeichen wird durch ein einfaches bzw. wiederholtes Betätigen der Zifferntaste ausgewählt und wird von der Programmführungseinrichtung im Textfeld angezeigt. Steht ein gewünschtes Zeichen nach Betätigen einer Zifferntaste an erster Stelle in der angezeigten Zeichenoption, unterbleibt ein weiteres Betätigen der Zifferntasten. Ein Navigieren über ein gewünschtes Zeichen hinaus wird dadurch erschwert, dass nach Betätigen der Zifferntaste des Fernbediengebers das ausgewählte Zeichen in der angezeigten Zeichenoption hervorgehoben und gleichzeitig im Textfeld angezeigt wird.

In einer besonders vorteilhaften Ausführungsform der Erfindung kann beispielsweise bei einer Suchfunktion der Zeichensatz von der Programmführungseinrichtung im Zeichenauswahlteld nur in der Kleinschreibung bereitgestellt werden, um die Zeicheneingabe besonders komfortabel und Quertzsortierung, sowohl in Großschreibung als auch in Kleinschreibung verfügbar, angeordnet und in einer geräteinternen Programmführungsdatenbank gespeichert ist.

Die Programmführungseinrichtung stellt das Menüsystem mit einem Hauptmodus und einem Nebenmodus bereit, welche ein Nutzer innerhalb einer einzigen Zeichenkette alternativ für die Eingabe von Zeichen verwenden kann. Hauptmodus sowie Nebenmodus können somit von der Programmführungseinrichtung auf der visuellen Ausgabevorrichtung, die mit dem Fernsehempfänger verbunden ist, gemeinsam ausgegeben werden.

im Hauptmodus stellt die Programmführungseinrichtung die Zeichen einer eingesteüten Sprache so dar, dass diese über den Fernbediengeber mit einem Cursor durch Interaktion mit dem Beschirm aufrufbar sind.

Im Gegensatz dazu teilt die Programmführungseinrichtung gemäß der Erfindung im Nebenmodus den Zeichensatz derart auf, dass mit jeder Zifferntaste des Fernbediengebers nur Teite vom Zeichensatz zur Auswahl zur Verfügung stehen. Vorteilhaft stehen Haupt- und Nebenmodus parallel zur Verfügung, sodass ein Nutzer mithilfe der t3ildschlrmdarstellung von belderl Modi nach Belieben einen von beiden zur Zeichenauswahl nutzen kann.

Gemäß der vorliegenden Erfindung kann aus dem Hauptmodus direkt durch Betätigung einer Zifferntaste auf dem Fernbediengeber in den Nebenmodus umgeschaltet werden. Nach Betätigung der Zifferntaste generiert die Programmführungseinrichtung anstelle des Zeichenauswahlfeldes eine Aufstellung der Zeichen, die durch diese Zifferntaste des Fernbediengebers aufrufbar sind.

Während im Hauptmodus ein zweidimensionales Zeicheiiauswahlfeld mit Zeichenauswahielementen zum Auswählen von Zeichen mit dem Cursor zur Verfügung steht, erscheint im Nebenmodus ein eindimensionales Anzeigefeld, dass alle möglichen Zeichen aufreiht, welche durch Drücken der Zifferntaste, gegebenenfalls durch mehrfaches Drücken, zur Verfügung stehen.

Unabhängig davon, ob die Eingabe eines Zeichens im Haupt- oder Nebenmodus erfolgt, zeigt die Programmführungseinrichtung die ausgewählten Zeichen, welche zu einem Text mit mindestens einer Zeichenkette gehören, in einem gemeinsamen Ergebnisfeld, im Weiteren als Textfeld bezeichnet. Das Textfeld kann in Abhängigkeit von der Empfängerfunktion ein oder mehrzellig auf, gebaut sein.

In einer vorteilhaften Ausführungsform weist der Hauptmodus im Zeichenauswahlfeld Zeichenauswahlelemente mit Sonderzeichen auf, welche die Eingabe von Internetadressen vereinfachen, um zu Internetdlensten und weiteren Medienanbietern Verbindung aufzunehmen. Diese Internetadressen können in einer weiteren Ausführungsform der Erfindung als Favoriten gespeichert und schnell ohne Umschalten zwischen Klein- und Großschreibung zu ermöglichen. Im Gegensatz dazu kann der Zeichensatz bei einer Eingabe von Passwörtern in Groß- und Kleinschreibung bereitgestellt werden.

Die Zeichensätze im Hauptmodus und Nebenmodus beinhalten alphanumerische Zeichen, wie Buchstaben und Ziffern, sowie weitere Zeichen, wie Satzzeichen und Zeichen für Rechenoperationen. In dieser Ausftihrungsform werden im Nebenmodus zusätzlich Buchstaben weiterer Sprachen bereitgestellt, um zusätzlich zur eingestellten Sprache des Fernsehempfängers auch Zeichen anderer Sprachen beispielsweise des europäischen Sprachraumes dem Nutzer zur Eingabe zur Verfügung zu stellen.

Das Zurückschalten vom Nebenmodus in den Hauptmodus erfolgt automatisch durch die Pro grammführungseinrichtung, wenn das Auswählen weiterer Zeichen mit dem Fernbediengeber unterbleibt oder eine vom Nutzer am Fernsehempfänger eingestellte Zeit abgelaufen ist.

Von Vorteil ist, dass der Nutzer einen schnellen Überblick über die zur Verfügung stehenden Zeichenauswahlelemente im Zeichenauswahlfeld erhält, da nur die Zeichen ausgegeben werden, die mit der betätigten Taste aufrufbar sind.

Bei fehlerhafter Auswahl eines Zeichens kann im Textfeld nicht nur linear vorwärts durch die Zeichenfolge navigiert werden, sondern auch rückwärts beispielsweise durch Betätigung einer Taste des Fernbediengebers.

Die vorliegende Erfindung wird anhand von Ausführungsformen weiter erläutert. Dabei stellen die Figuren Folgendes dar:
Figur 1: Teilbereich eines Fernbediengebers mit alphanumerischem Tastenbereich,
Figur 2: Darstellung eines Menüs vom Hauptmodus zum Auslösen von Empfängerfunktionen mit alphabetisch sortierten Zeichenauswahielementen,
Figur 3: Darstellung eines Menüs vom Hauptmodus zum Auslösen von Empfängerfunktionen mit weiteren alphabetisch sortierten Zeichenauswahlelementen,
Figur 4: Darstellung eines Menüs zum Auslösen von Empfängerfunktionen mit einem Zeichenauswahlfeld, bei dem die Auswahlelemente analog einer Quertzsortierung angeordnet sind,
Figur 5: Darstellung eines Menüs vom Nebenmodus zum Auslösen von Empfängerfunktionen mit der Anzeige einer Zeichenoption, die einer betätigten Zifferntaste zugrunde liegt,
Figur 6: Darstellung eines Menüs zur Eingabe von Internetadressen mit alphabetisch sortierten Zeichenauswahlelementen im Zeichenauswahlfeld,
Figur 7: Darstellung eines Menüs zum Auslösen von Empfängerfunktionen mit einem Auswahlfeld in einer alternativen Struktur der Zelchenauswahlelemente und
Figur 8: Darstellung eines angepassten Zeichenauswahlfeldes mit zusätzlichen Zeichenauswahlelementen und einem mehrzeiligen Textfeld.

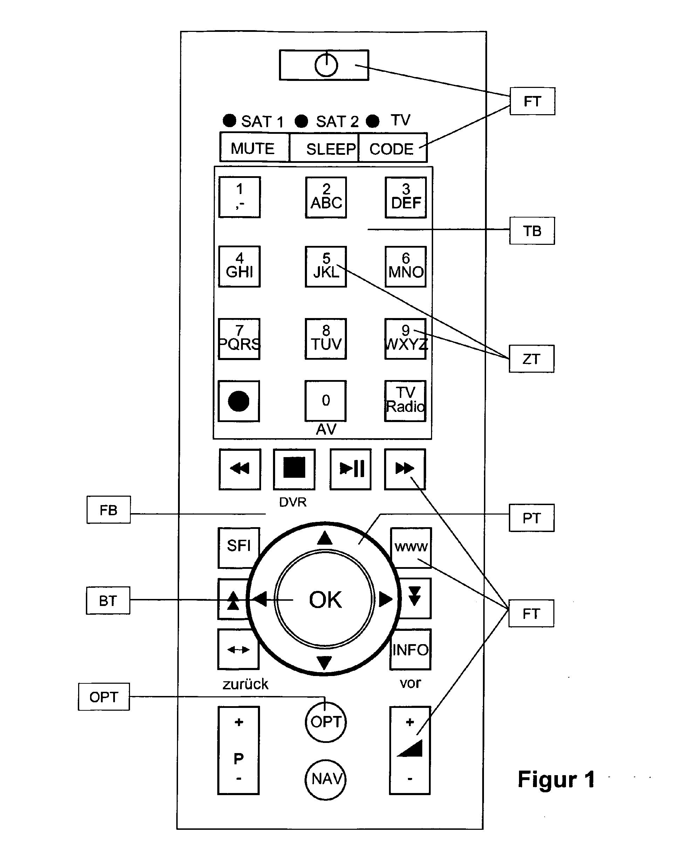

Die Figur 1 zeigt einen Teilbereich eines drahtlosen Fernbediengebers FB, der zum Bedienen eines digitalen Fernsehempfängers genutzt wird und die erfindungsgemäße Eingabe von Zeichen unterstützt. Der Fernbediengeber FB verfügt als Bestandteil eines in den Figuren nicht dargestellten Fembediensystems über einen Sender von Signalen sowie eine Steuerschaltung, die erkennt, welche Taste oder wie oft eine Taste betätigt wurde. Diese Information setzt der Fernbediengeber FB in ein Signal um, das an den Fernsehempfänger gesendet wird. Bei der vorliegenden Erfindung unterstützt der Fernbediengeber FB unter anderem die Auswahl und Eingabe von alphanumerischen Zeichen. Der Fernbediengeber FB beinhaltet Funktionstasten FT, einen Tastenbereich TB mit Zifferntasten ZT 0 bis 9, eine Bestätigungstaste BT, eine Optionstaste OPT sowie Pleiltasten PT für Richtungsänderungen des Cursors C. Zu den Funktionstasten FT gehören weiterhin Tasten, die eine Lautstärkeänderung, ein Umschalten zwischen Dienstanbietern, welche Medieninhalte zum Empfang bereitstellen, oder ein Umschalten zwischen einer Radio- und Fernsehfunktion, ein Umschalten von einem Fernsehempfangsmodus zu einem lnternetmodus und insbesondere ein Verbinden des Fernsehempfängers mit dem Internet zum Aufrufen von Intenietseiten sowie ein Wechseln zwischen favorisierten Internetseiten gewährleisten. Das Aufrufen von Internetseiten kann über die Funktionstaste ,wYAv' des Fernbediengebers FB erfolgen.

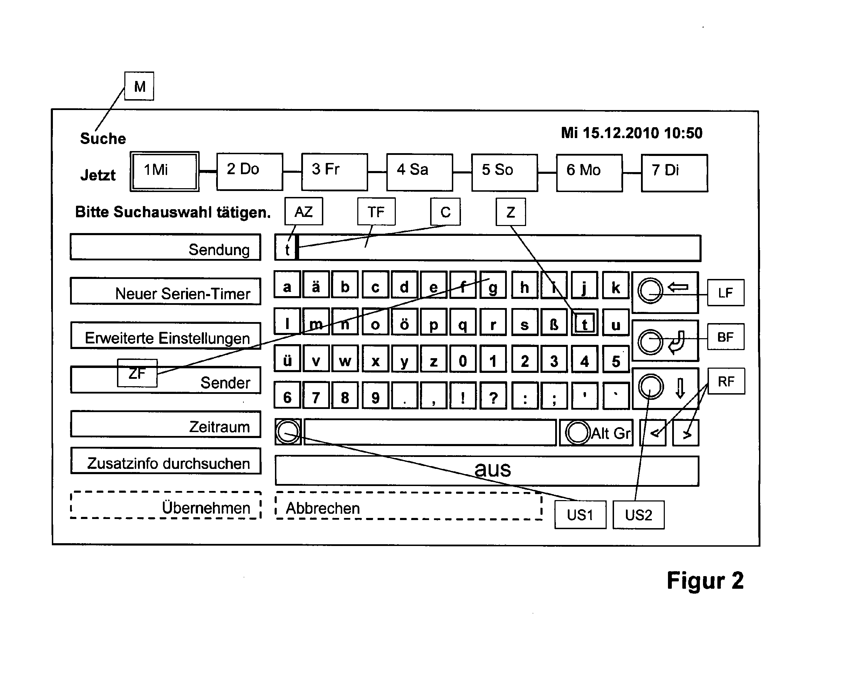

In den Figuren 2 bis 4 wird eine Ausführungsform der Erfindung zur Zeicheneingabe dargestellt, bei der die Auswahl der Zeichen in einem von der Programmführungseinrichtung bereitgestellten Menü, in einem Hauptmodus, erfolgt. In einem Zeichenauswahlfeld ZF wird mithilfe von Pfeiltasten PT des Fernbediengebers FB nach oben, unten, rechts sowie links zu einem Zelchenauswahlelement navigiert. Die Übernahme des gewünschten Zeichens in ein Textfeld TF erfolgt durch Betätigung der Bestätigungstaste BT des Fornbediengebers FB.

Die Figur 2 zeigt ein Menü M für eine Suchanfrage, welches in der nicht dargestellten Programmführungsdatenbank gespeichert und nach Betätigung einer Taste des Fernbediengebers FB durch die Programmführungseinrichtung bereitgestellt wird. Das Menü M dient zum Aktivieren einer Empfängerfunktion, einer Suche, für die zum Auslösen eine Eingabe von Zeichen erforderlich ist. Das Menü M beinhaltet das Zeichenauswahlfeld ZF, das Textfeld TF, verschiedene Umschaltfelder US1, US2, faichtungsfelder RF, ein Bestäligungsfeld.BF, ein Löschfeld LF. Das Zeichenauswahlfeld ZF, das in einem Hauptmodus Zeichenauswahlelemente mit einem Vorrat an Zeichen aus einem Zeichensatz beinhaltet, welcher auf einer am Fernsehempfänger eingestellten und gespeicherten Sprache basiert, steht zur Auswahl und Eingabe von Zeichen zur Verfügung. In der Figur 2 sind die Zeichenauswahlelemente des Zeichensatzes in Kleinbuchstaben alphabetisch sortiert. Im Textfeld TF werden die Zeichen aufgeführt, die aus dem Zeichenauswehlfeld ZF durch Verwendung der Pfeiltasten PT sowie durch Betätigung der Bestätigungstaste BT des Fernbediengebers FB ausgewählt wurden. Ein im Zeichenauswahlfeld ZF ausgewähltes Zeichenauswahielement, das einem Zeichen Z entspricht, wird durch Hervorhebung im vorliegenden Beispiel, beispielsweise durch einen hellen Rahmen, gekennzeichnet. Der Cursor C Im Textfeld TF dient als Positionsanzeiger für eine Position, an der eine weitere Zeicheneingabe oder eine Korrektur eines Zeichens erfolgen kann. Ein Bewegen des Cursors C innerhalb des Textfeldes TF wird hier nach Anwählen eines Richtungsfeldes RF beispielsweise links und durch Betätigung der 8estätigungstaste BT des Fernbediengebers FB ausgeführt.

Mit einer nicht dargestellten Löschtaste des Fernbediengebers FB werden im Textfeld TF dargestellte Zeichen AZ links neben dem Cursor C schnell gelöscht, sollen mehrere Zeichen links neben dem Cursor C gelöscht werden, wird die Löschtaste des Fernbediengebers FB mehrfach betätigt, Eine weitere Möglichkeit zum Löschen von Zeichen im Textfeld TF besteht darin, das Löschfeld LF im Hauptmodus mit dem Fernbediengeber FB anzuwählen und durch Betätigen der Bestätigungstaste BT mit dem Fernbediengeber FB das Löschen der Zeichen AZ links vom Cursor C auszuführen. Ist der Suchbegriff im Textfeld TF komplett, wird dieser mlt dem Bestätigungsfeld BF im Menü M, mithilfe der Pfeiltasten PO des Fernbediengebers FB, angewählt und durch Betätigung der Bestätigungstaste BT des Fernbediengebers FB für die Suche übernommen. In einem übergeordneten Menü können weitere Eingaben, welche Suchkriterien zum Beispiel für eine automatische Aufnahme verfeinern, getätigt werden.

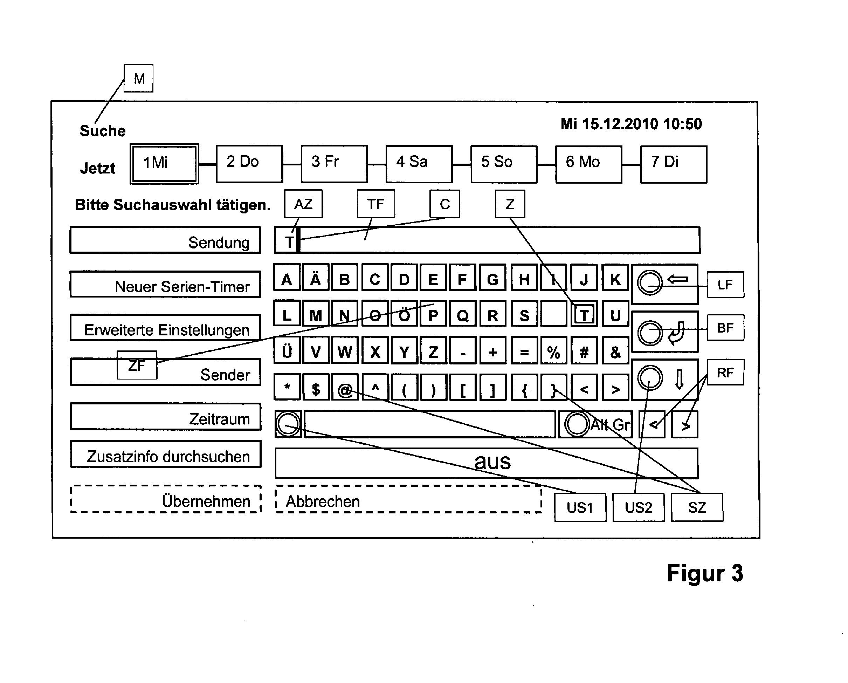

In der Figur 3 wird nach Betätigung des Umschaltfeldes US2 das Zeichenauswahlfeld ZF in der alphabetischen Sortierung der Elemente auf Großbuchstaben umgeschaltet. Besonders vorteil haft ist, dass anstatt der Ziffern der Figur 2 hier Sonderzeichen SZ bereitgestellt werden. Zeichen, wie das β, welches in der Großschreibung keine Verwendung findet, wird ausgeblendet.

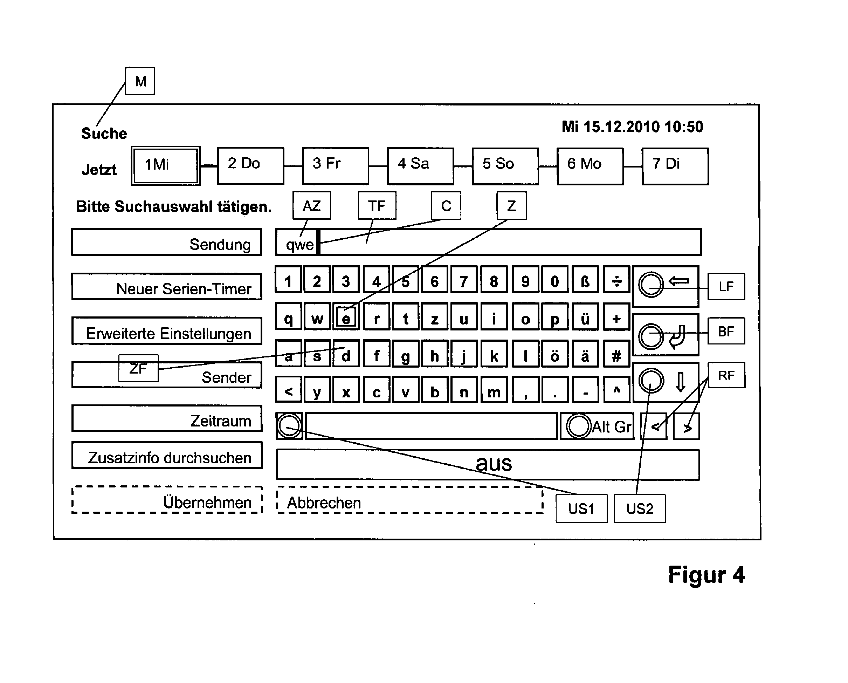

Die Figur 4 zeigt das Zeichenauswahlfeld ZF in einer anderen Sortierung der Elemente. Die Zeichen werden in der sogenannten Quertzsortierung zur Auswahl angeboten. Die Umschaltung zu dieser Zeichensortierung erfolgt durch Betätigung einer Funktionstaste FT des drahtlosen Fernbediengebers FB, der als Funkfernbedienung oder als Infrarotternbedienung ausgebildet sein kann, beispielsweise durch Betätigung der Optionstaste OPT. Diese Sortierung der Zeichen Z kann auch, wie die alphabetische Sortierung in Großbuchstaben, durch Betätigung des Umschaltfeldes US2 ausgewählt und von der Programmführungseinrichtung bereitgestellt werden.

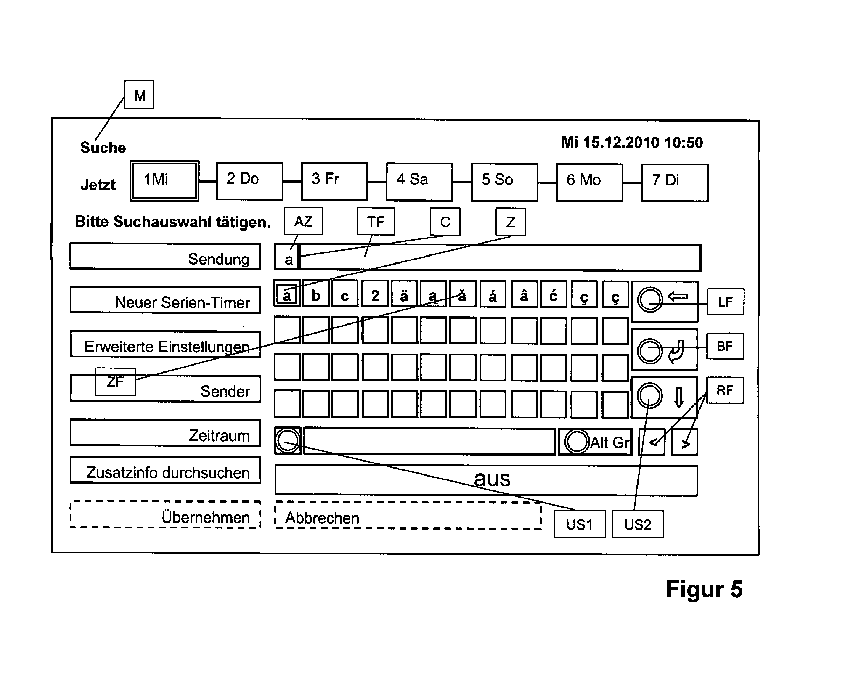

Die Figur 5 zeigt eine weitere Ausführungsform-der Erfindung zur Auswahl und Eingabe von Zeichen. Sie unterscheidet sich in diesem Nebenmodus vom Hauptmodus dadurch, dass die Auswahl und Eingabe von Zeichen direkt durch Betätigung der Zifferntasten ZT des Fernbediengebers FB erfolgt. In dieser Ausführungsform werden nur die Zeichenauswahlelemente im Zeichenauswahlfeld ZF dargestellt, die durch Betätigen einer der Zifferntasten des Fernbediengebers FB von der Programmführungseinrichtung bereitgestellt werden. Vom Hauptmodus wird in den Nebenmodus durch Betätigung irgendeiner der Zifferntasten ZT 0 bis 9 des Tastenbereiches TB des Fernbediengebers FB umgeschaltet. Im dargestellten Beispiel werden nach Betätigung der Zifferntaste ZT2 eine Zeichenoption anstelle des Zeichenauswahlfeldes von der Programmführungseinrichtung alle die Zeichen bereitgestellt, die durch Betätigen der Ziffernfaste ZT2 auswählbar sind.

Die Zeichen, die nicht durch die Zifferntaste ZT auswählbar sind, erscheinen nicht im Menü. Da die Zeichen nur in einer Zeile des Zeichenauswahlfeldes ZF angeordnet sind, ist ein einfaches Navigieren durch die Zeichen möglich und die Wahrscheinlichkeit einer falschen Zeichenauswaht wird reduziert. Vorteilhaft ist, dass durch das lineare Navigieren nur durch einmaliges oder mehrfaches Betätigen der Zifferntaste ZT ein zeitsparenderes Auswählen von Zeichen eines Suchwortes als beim Navigieren in mehreren Reihen möglich ist. Erfolgt innerhalb einer am Fernsehempfänger vom Nutzer einstellbaren Zeit keine Zeicheneingabe im Nebenmodus, so schaltet die Programmführungseinrichtung zurück in den Hauptmodus.

Besonders vorteilhaft ist, dass zusätzlich zu den Zeichen Z der eingestellten Sprache auch Zeichen, die Buchstaben weiterer Sprachen sind, angezeigt werden. Dadurch ist es möglich, auch fremdsprachige Suchbegriffe einzugeben und die Suchfunktion mit diesem Begriff auszulösen.

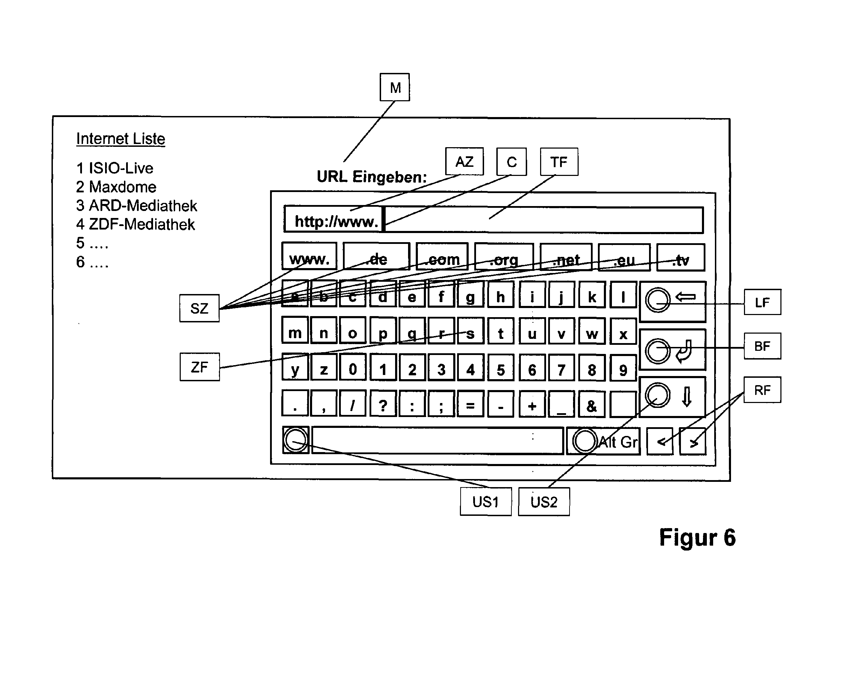

Figur 6 zeigt Zelchenauswahlelemente im Zeichenauswahlfeld ZF, das Sonderzeichen SZ beinhaltet, welche die Eingabe von Internetadressen vereinfacht, um zu weiteren Modienanbietern Verbindung aufzunehmen. Diese Internetadressen können in einer weiteren Ausführungsform der Erfindung als Favoriten gespeichert und direkt durch Betätigen der Funktionstaste ,www' des Fernbediengebers FS aufgerufen werden.

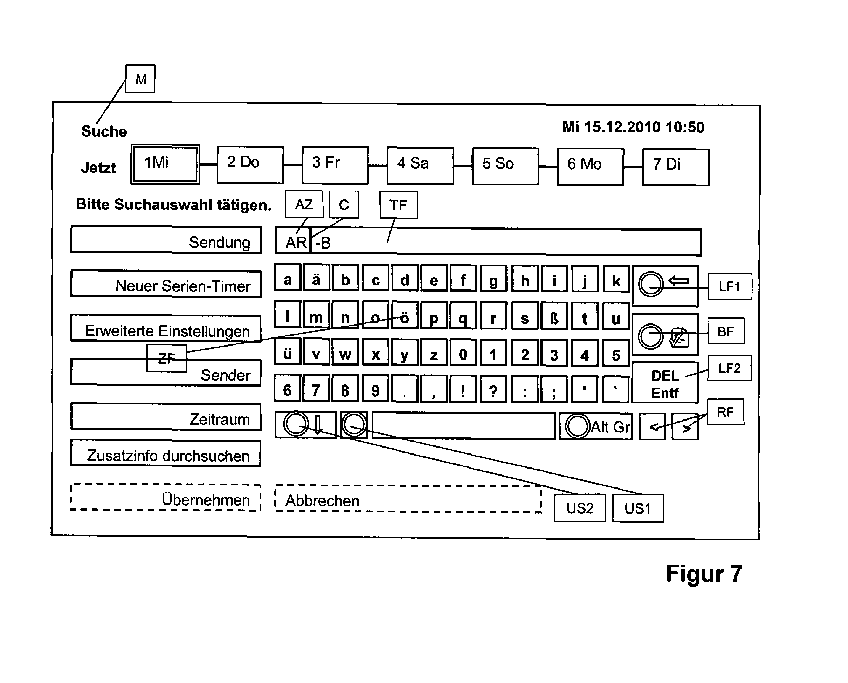

In der Figur 7 ist ein Menü zum Auslösen von Empfängerfunktionen mit einem Auswahlfeld In einer alternativen Struktur der Zeichenauswahlelemente dargestellt. In einer speziellen Version vom Zeichenausvrahlfeld ZF ist es möglich, mit einem besonderen Löschfeld LF2 Zeichen AZ im Textfeld TF rechts neben dem Cursor C zu löschen, falls eine Zeichenkorrektur notwendig ist.

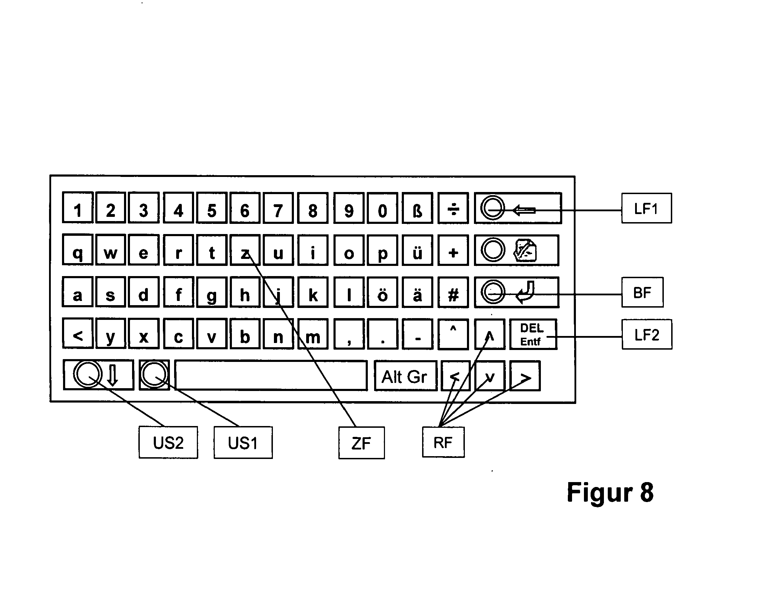

Figur 8 stellt ein Zeichenauswahlfeld ZF mit zusätzlichen Zeichenauswahlelementen dar, welches von der Programmführungselnrichtung in dem fall bereitgestellt wird, dass für eine Eingabe von Zeichen im Textfefd TF mehr als nur eine Zeile zur Verfügung steht und dann von der Programmführungseinrichtung zur Eingabe von Zeichen bereitgestellt wird, wenn beispielsweise der Fernsehempfänger eine Suchfunktion im Internet ausführen soll, das nicht dargestellte TeYtteld wird in diesem Fall vom Internet bereitgestellt.

Mit den beschriebenen Ausführungstarmen der Erfindung wird es dem Nutzer ermöglicht, Zeichen komfortabel und zeitsparend einzugeben, die für die Aktivierung von besonderen Empfängerfunktionen erforderlich sind. Dazu werden dem Nutzer verschiedene Sortierungen im Zeichenauswahlfeld in einem Haupt- und Nebenmodus bereitgestellt. Der Nutzer kann für die Zeichenauswahl diejenige Zeichensortierung nutzen, die für ihn angenehm und komfortabel ist. Mit der vorliegenden Erfindung werden zusätzliche Hardwarekomponenten, wie separate Tastaturen, vermieden.

Vorteilhaft bei der vorgestellten Lösung ist, dass unter Einbeziehung von Funktionstasten FT, beispielsweise rot, grün, gelb, einer Optionstaste OPT sowie des Fernbediengebers FB die Eingabe so vereinfacht wird, dass ohne zusätzliche Hardwarekomponente, wie einer Computertastatur, ein komfortables Aktivieren einer Empfängerfunktion, wie das Auslösen der Suche nach einem Medieninhalt, für den beispielsweise eine automatische Aufnahme ausgelöst werden soll, möglich wird.

Ein weiterer Vorteil der Erfindung besteht darin, dass die Programmführungseinrichtung in Abhängigkeit von der gewünschten Empfängerfunktion das Zeichenauswahlfeld ZF und Textfeld TF in Struktur, Eingabe- und Auswahlfunktion anpasst. Die Anzahl der auswählbaren und im Textfeld TF angezeigten Zeichen AZ kann variieren. Bei einem Überschreiten einer intern definierten Anzahl von ausgewählten Zeichen AZ kann das Textfeld TF automatisch von der Programmführungseinrichtung in ein mehrzeiliges Textfeld TF umgewandelt werden.

Zusätzlich passt die Programmführungseinheit die Struktur und den Buchstabenvorrat der Zeichenauswahltelder ZF in Abhängigkeit von der gewünschten Empfängerfunktion an.

## Patentansprüche

1. Vorrichtung zum Eingeben und Edleren von Zeichenketten in einem digitalen Fernsehempfänger mit einem Fernbediengeber (FB), wobei die Vorrichtung in eine empfängerinteme Programmführungseinrichtung des Fernsehempfängers implementiert ist und in Interaktion eines Cursors (C) mit dem Fernbediengeber (FB) Zeichen (Z) für die Zelchenketten mithilfe von Zeichenauswahlfeldern (ZF) mit Zeichenauswahleiementen und Funktionsfeldern (L.F, BF, RF), die auf einem Bildschirm angezeigt werden, zum Eingeben von Zeichen (Z) in die Zeichenkette oder Editieren der Zeichenketten auswählt, **dadurch gekennzeichnet,**
**dass** die Vorrichtung ein Menüsystem generiert, welches:
- in einem Hauptmodus jeweils ein Zeichenauswahlfeld (ZF) mit einer Struktur von Zelchenauswahlelementen für eine Zeichenauswahl aus verschiedenen alphanumerischen Zeichensätzen mit Interaktion des Cursors (C) für ein Textfeld (fF) bereitstellt.
- beim Betätigen einer Zifferntaste (ZT) des Fernbediengebers (FB) einen Nebenmodus aktiviert, der in einem Parallelbetrieb mit dem Hauptmodus eine Auswahl und Eingabe von den Zeichen (Z), die jeweils der betätigten Ziffern taste (ZT) zugeordnet sind, ermöglicht.
- wobei die Vorrichtung Menüs sowohl für den Hauptmodus als auch für den Nebenmodus jeweils automatisch die Struktur von Zeichenauswahlelementen und Eingabeoptionen des Zeichenauswahlfeldes an die gewünschte Empfängerfunktion anpasst.

2. Vorrichtung nach Anspruch 1, bei der im Hauptmodus Zeichenauswahlfelder (ZF) aufrufbar sind, welche Zeichensätze in verschiedenen Sortierungen und/oder verschiedene Strukturen von Zeichenauswahlelementen enthalten, wobei die Zeichensätze automatisch einen Buchstabenvorrat beinhalten, welcher einer in der grafischen Benutzeroberfläche des Fernsehempfängers eingestellten Sprache, als 8enutzersprache, zugeordnet ist.

3. Vorrichtung nach Anspruch 1, bei der im Nebenmodus jeder Zifferntaste (ZT) des Fernbediengebers (FB) Zeichen der verschiedenen Zeichensätze vom Hauptmodus durch die Programmführungseinrichtung zugeordnet sind und die durch Betätigung einer der Zifferntasten (ZT) für den Nutzer zur Auswahl bereitgestellt werden.

4. Vorrichtung nach Anspruch t, bei der im Hauptmodus die Interaktion der Funktionstasten (FT) des Fernbediengebers (FB) mit dem durch den Cursor (C) hervorgehobenen Zeichenauswahlelementen ein Auswählen einzelner Zeichen (Z) des Zeichensatzes und ein Übertragen des ausgewählten Zeichens (AZ) in das Textfeld (TF) bewirkt.

5. Vorrichtung nach Ansprüchen 2 und 3, bei der die Programmführungseinrichtung im Nebenmodus einzelnen Zifferntasten zusätzliche Zeichen (Z) zuordnet, die über den Zeichenvorrat des Zeichensatzes vom Hauptmodus hinausgehen.

6. Vorrichtung nach Anspruch 5, welche im Nebenmodus die Auswahl eines Zeichens (Z) durch mehrfaches Betätigen einer der Zifferntasten (ZT) des Fernbediengebers (FB) unterstützt, wobei das ausgewählte Zeichen (AZ) im Textfeld (TF) ausgegeben-wird.

7. Vorrichtung nach Anspruch t, bei der die Programmführungseinrichtung automatisch vom Nebenmodus zurück in den Hauptmodus schaltet, wenn keine Zeichenauswahl durch Betätigung einer der Zifferntasten (ZT) erfolgt und eine in einem Sondermenü des Fernsehempfängers nutzerseitig eingestellte Zeit abgelaufen ist.

8. Vorrichtung nach Anspruch 1, bei der die Programmtührungseinrichtung durch den Cursor (C) gesteuerte Umschaltfelder (US1. US2) generiert, die eine Umschaltung zwischen verschiedenen Sortierungen der Im Zelchenauswahlfeld (ZF) angeordneten Zeichenauswahielemente ermöglichen.

9. Vorrichtung nach Anspruch 1, bei der die Zelchenauswahlelemente im Zeichenauswahlfeld (ZF) in dem Hauptmodus entweder alphabetisch sortiert sind oder einer Quertzsortierung entsprechen.

10. Vorrichtung nach Anspruch 1, bei der im Hauptmodus ein Navigleren zwischen den ausgewählten und im Textfeld (TF) wiedergegebenen Zeichen (AZ) durch Anwählen eines der Richtungsfelder (RF) und Bestätigung mit einer Taste des Fernbediengebers (FB) erfolgt.

11. Vorrichtung nach Anspruch 1, bei der im Hauptmodus die Zeichenauswahl durch Anwählen eines Zeichenauswahielementes im Zeichenauswahlfeld (ZF) durch Funktionstasten (FT) des Fernbediengebers (FB) erfolgt und mit dem Fernbediengeber (FB) bestätigt, die Zeichenauswahl aktiviert und wobei das ausgewählte Zeichen (Z) im Textfeld (TF) ausgegeben wird.

12. Vorrichtung nach Anspruch 1, bei der durch Änderung einer Spracheinstellung des Fernsehempfängers der Zeichensatz für die Zeichenauswahlelemente des Zeichenauswahlfeldes (ZF) durch die Programmführungseinrichtung automatisch angepasst wird.

13. Vorrichtung nach Anspruch 1, bei der die Programmführungseinrichtung automatisch das Zeichenauswahlfeld (ZF) und das Textfeld (TF) bezüglich der Struktur der Zelchenauswahielerriente, der auswählbaren Zeichen (Z) und/oder Eingabeoptionen abhängig von der gewünschten Empfängerfunktlon und der eingestellten Sprache anpasst.

14. Vorrichtung nach Anspruch 13, bei der von der Programmführungseinrichtung das Textfeld (TF) in Abhängigkeit von der gewünschten Empfängorfunktion bei einem Überschreiten einer intern definierten Anzahl von ausgewählten Zeichen (AZ) in ein mehrzeiliges Textfeld (TF) umgewandelt wird.

15. Vorrichtung nach Anspruch 13, bei der die Struktur und der 2elchenwrrat für Zeichenauswahielemente in Abhängigkeit von der gewünschten Emptängerfunktlon festgelegt ist.
